# EUROPEAN PATENT APPLICATION

(11) **EP 2 490 110 A2**
(43) Date of publication of application: **22.08.2012**
(21) Application number: 11184442.9
(22) Date of filing: 07.10.2011
(51) Int. Cl.: G06F 3/048

(54) **Electronic device and method for providing animated page**

(30) Priority: 21.02.2011 TW 100105570
(71) Applicant: Hon Hai Precision Industry Co., Ltd., New Taipei City (TW)
(72) Inventor: Lin Tay-Yang, Tu-Cheng, New Taipei (TW); Chen Chin-Feng, Tu-Cheng, New Taipei (TW); Liu Shu-Ming, Tu-Cheng, New Taipei (TW); Shih Chi-Tse, Tu-Cheng, New Taipei (TW); Hou Ni-Chun, Tu-Cheng, New Taipei (TW); Hsu Hsin-Chih, Tu-Cheng, New Taipei (TW); Du Cheng-Hsiu, Tu-Cheng, New Taipei (TW)
(74) Representative: Gray, John James

(57) **Abstract**

An electronic device includes a touch-screen display, a processor, a memory, and one or more modules stored in the memory. The one or more modules are adapted to be executed by the processor to display a page on the touch-screen display. The one or more modules are adapted to detect one or more contact actions on the page on the touch-screen display. The one or more modules are adapted to transform the page into a predefined artifact in response to the one or more contact actions. The one or more modules are adapted to receive a predefined command action to the predefined artifact displayed in the touch-screen display. The one or more modules are adapted to perform an operation on the predefined artifact in response to the predefined command action.

## Description

### Field

The disclosed embodiments generally relate to user interfaces, and more particularly, to a animated page on a portable electronic device.

### BackGround

Electronic devices with touch-screens and applications running on such devices may have message or e-mail functions through network communication. Traditionally, when a message or an e-mail is finished, the message or e-mail may be sent by pressing a "send" button.

However, the traditional way of sending messages or e-mails without added animation are strict and cannot reflect a mood of the sender.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiments. Moreover, in the drawings, like reference numerals designate corresponding parts throughout the several views.

FIG. 1 is a block view of an electronic device in one embodiment.

FIG. 2 is a user interface including an original page in one embodiment.

FIG. 3 is a series of the pages transforming from the original page into an artifact in one embodiment.
FIG. 4 is the user interface including the artifact in one embodiment;

FIG. 5 is a flow chart illustrating a method for providing command to page in one embodiment.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In general, the word "module," as used herein, refers to logic embodied in hardware or firmware, or to a collection of software instructions written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

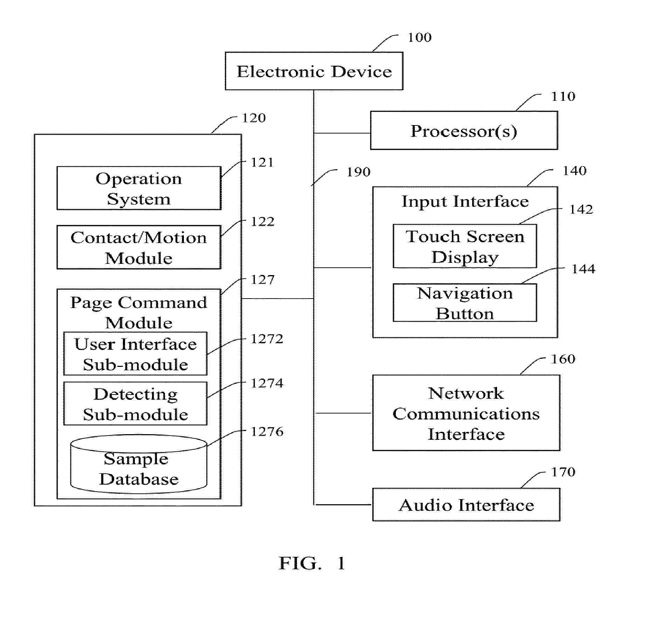

FIG. 1 is a block diagram illustrating a multifunction electronic device 100 in accordance with one embodiment. The electronic device 100 may be a portable electronic device or a tablet computer. The electronic device 100 typically includes one or more processors 110, a memory 120, one or more input interfaces 140, one or more network communication interfaces 160, one or more audio interfaces 170, and one or more communication buses 190 for interconnecting these components.

It should be appreciated that the electronic device 100 is only one example of a multifunction device, and that the electronic device 100 may have more or fewer components than shown or disclosed, it may combine two or more components, or it may have a different configuration or arrangement of the components. The various components shown in FIG. 1 may be implemented in hardware, software, or a combination of both hardware and software, including one or more signal processing and/or application-specific integrated circuits.

The memory 120 includes high-speed random access memory, and may include non-volatile memory, such as one or more magnetic disk storage devices, optical disk storage devices, flash memory devices, or other non-volatile solid state storage devices. The memory 120 may optionally include one or more storage devices remotely located from the processors 110. A memory controller may control all access to the memory 120 by other components of the electronic device 100, such as the processor 110. The one or more processors 110 may run or execute various software programs and/or sets of instructions stored in the memory 120 to perform various functions for the electronic device 100 and to process data.

The communication buses 190 may include circuitry that interconnects and controls communications between system components.

The input interfaces 140 may include a touch-screen display 142 and one or more navigation buttons 144. The touch-screen display 142 may be called a touch-sensitive display. The input interfaces 140 may also include other input devices such as a keyboard and/or mouse and/or other pointing devices.

The touch-screen display 142 provides an input interface and an output interface between the electronic device 100 and a user. The touch-screen display 142 includes a touch-sensitive surface that accepts input from the user based on physical contact and may display visual output to the user. The visual output may include graphics, text, icons, video, and any combination thereof. In some embodiments, some or all of the visual outputs may correspond to, or represent, user-interface objects. The touch-screen display 142 detects contact (and any motion or breaking of the contact) on the touch-screen display 142 and converts the detected contact into an interaction with user-interface objects (e.g., one or more soft keys, icons, web pages or images) that are displayed on the touch-screen display 142. In one embodiment, contact between a touch-screen display 142 and the user may be achieved by the use of a finger of the user.

The touch-screen display 142 may use liquid crystal display (LCD) technology, or a light emitting polymer display (LPD) technology, although other display technologies may be used in other embodiments. The touch-screen display 142 may detect contact and any motion using any of a plurality of touch sensing technologies now known or later to be developed, including but not limited to, capacitive, resistive, infrared, and surface acoustic wave technologies, as well as other proximity sensor arrays or other elements for determining one or more points of contact with a touch-screen display 142. The user may make contact with the touch-screen display 142 using any suitable object or appendage, such as a stylus or a finger. In some embodiments, the user interface is designed to work primarily with fingertip contact and motions, which are less precise than stylus-based input due to the larger area of surface contact of a finger on the touch-screen.

In some embodiments, the electronic device 100 may include a navigation button (or wheel) 144 as an input control device. The user may navigate among and interact with one or more graphical objects displayed on the touch-screen display 142 by rotating or clicking the navigation button 144 as required.

The network communication interface 160 may include wireless communication interface and wired communication interface. The wireless communication interface may use any of a plurality of communications standards, protocols and technologies, including but not limited to Global System for Mobile Communications (GSM), Enhanced Data GSM Environment (EDGE), wideband code division multiple access (W-CDMA), code division multiple access (CDMA), time division multiple access (TDMA), BLUETOOTH, Wireless Fidelity (Wi-Fi) (e.g., IEEE 802.11a, IEEE 802.11b, IEEE 802.11g and/or IEEE 802.11n), voice over Internet Protocol (VolP), Wi-MAX, a protocol for email, instant messaging, and/or Short Message Service (SMS), or any other suitable communication protocol, including communication protocols not yet developed.

The audio interface 170 is provided between a user and the electronic device 100, and may include audio circuitry, a speaker, and a microphone.

In some embodiments, the software components stored in the memory 120 may include an operating system 121, a contact/motion module (or set of instructions) 122, and a page command module 127.

The operating system 121 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, and power management) and facilitates communication between various hardware and software components.

The contact/motion module 122 may detect contact with the touch-screen display 142. The contact/motion module 122 includes various software components for performing various operations as a result of the detection of contact, such as determining if there is motion of the contact and tracking the motion across the touch-screen display 142, and determining if the contact has been broken (i.e., if the contact has ceased). Determining any motion of the point of contact may include determining its speed (magnitude), velocity (magnitude and direction), and/or an acceleration (a change in magnitude and/or direction). These operations may be applied for single contacts (e.g., one finger contacts) or to multiple simultaneous contacts (e.g., "multi-touch"/multiple finger contacts).

The page command module 127 may include a user interface sub-module 1272, a detecting sub-module 1274, and a sample database 1276.

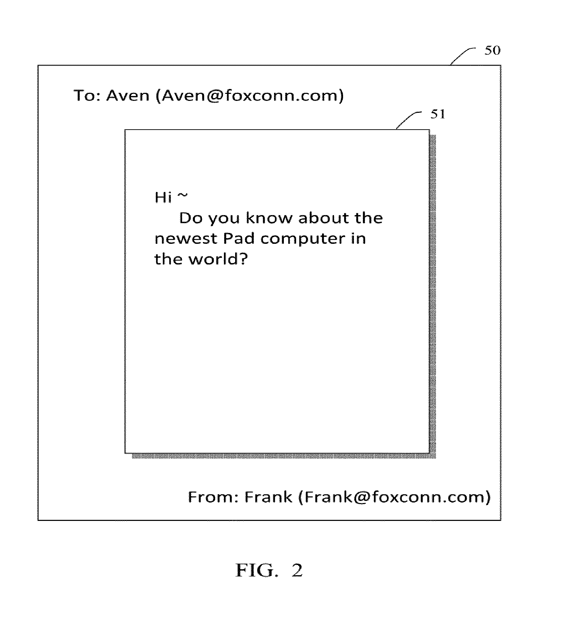

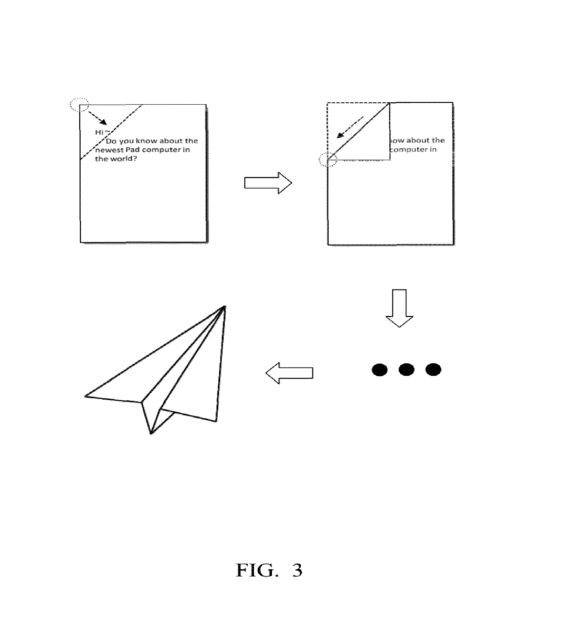

Referring to FIG. 2 and FIG. 3, the user interface sub-module 1272 may draw a user interface 50 and display a page 51. The page may be a message or an e-mail created by a word editing application, such as MICROSOFT WORD^{®} or a notebook application. A user may perform a series of the contact actions on the touch-screen display 142 to transform the page 51 into any artifacts stored in the sample database 1276. The user interface sub-module 1272 may detect an example artifact of the user and prompt the transforming method of the artifact along with the contact actions preformed by the user. The page 51 may be transformed simultaneously with each of the contact actions.

For example, the page 51 is dragged on an edge to roll the edge, and a slide operation follows, applied on the rolled edge, the edge is folded. The user interface sub-module 1272 detects the drag operation and finds an airplane artifact from the sample database 1276. The user interface sub-module 1272 may prompt the user on the touch-screen display 142 to guide the user to transform the page into the airplane artifact.

In other embodiments, the contact actions may include multi-touch contact actions and the page 51 may be transformed to other artifacts based on the mood of user. For example, the page 51 may be transformed to a paper spitball when the user is in another mood.

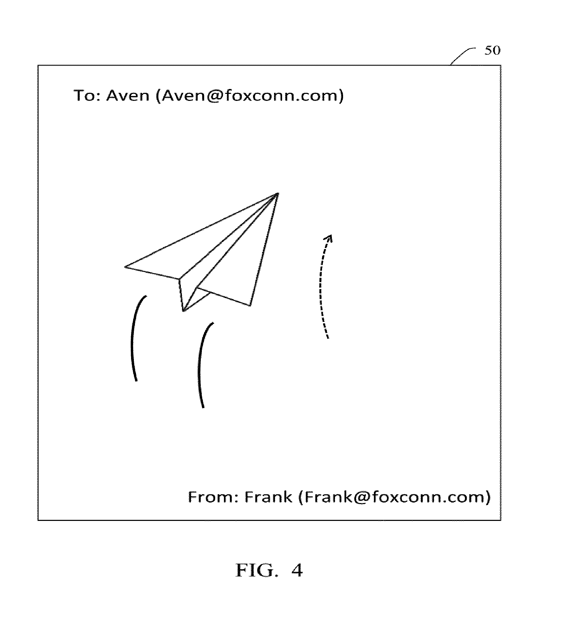

Referring to FIG. 4, the detecting sub-module 1274 may detect a predefined command action to the artifact transformed by the user. The predefined command action may be a slide operation or a press operation. The detecting sub-module 1274 may perform an operation in response to the predefined command action. The operation may be a sending operation of the artifact through a network or a deleting operation of the artifact. The artifact may be another form of the paper once it gets to a client of the user. The receiver may receive the page 51 as a usual message or an e-mail.

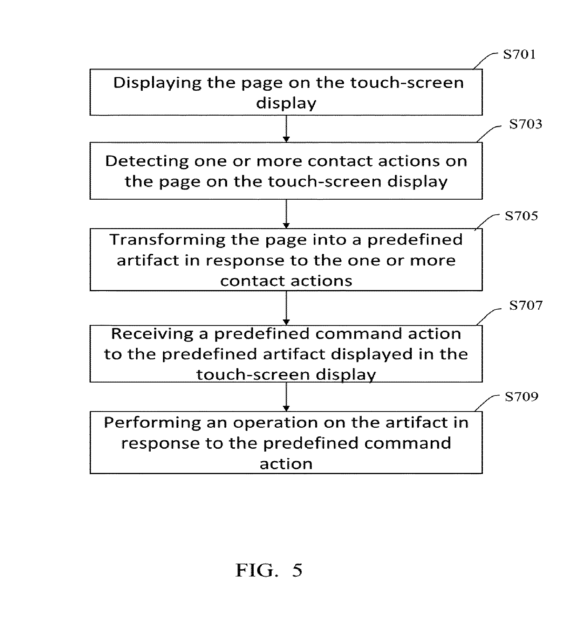

Referring to FIG. 5, in one embodiment, a computer-implemented method for providing a command to a page in an electronic device with a touch-screen display may include the following blocks. While the process flow described below includes a number of operations that appear to occur in a specific order, it should be apparent that these processes could include more or fewer operations, which can be executed in series or in parallel (e.g., using parallel processors or other multi-threading environment).

In block S701, displaying the page 51 on the touch-screen display 142.

In block S703, detecting one or more contact actions on the page 51 on the touch-screen display 142.

In block S705, transforming the page 51 into a predefined artifact in response to the one or more contact actions.

In block S707, receiving a predefined command action to the predefined artifact displayed in the touch-screen display 142.

In block S709, performing an operation on the artifact in response to the predefined command action.

The method may further include searching a sample database 1276 to find the predefined artifact, and prompting the predefined artifact.

It is to be understood, however, that even though numerous characteristics and advantages have been set forth in the foregoing description of embodiments, together with details of the structures and functions of the embodiments, the disclosure is illustrative only and changes may be made in detail, especially in matters of shape, size, and arrangement of parts within the principles of the disclosure to the full extent indicated by the broad general meaning of the terms in which the appended claims are expressed.

Depending on the embodiment, certain blocks or methods described may be removed, others may be added, and the sequence of blocks may be altered. It is also to be understood that the description and the claims drawn for or in relation to a method may include some indication in reference to certain blocks. However, any indication used is only to be viewed for identification purposes and not as a suggestion as to an order for the blocks.

## Claims

1. A computer-implemented method of providing a command to a page in an electronic device with a touch-screen display, comprising:
displaying the page on the touch-screen display;
detecting one or more contact actions on the page on the touch-screen display;
transforming the page into a predefined artifact in response to the one or more contact actions;
receiving a predefined command action to the predefined artifact displayed in the touch-screen display; and
performing an operation on the predefined artifact in response to the predefined command action.

2. The method of the claim 1, wherein the detecting the one or more contact actions on the page on the touch-screen display comprises detecting a dragging action on one or more edges of the page; and the transforming the page into the predefined artifact comprises folding the page in response to the dragging action.

3. The method of the claim 2, wherein the detecting the one or more contact actions further comprises detecting a dragging action on the one or more edges of the page and a slide operation on the one or more edges of the page; and the transforming the page into the predefined artifact further comprising folding the page in response to the dragging action and the slide operation.

4. The method of the claim 1, wherein the one or more contact actions comprise a series of contact actions.

5. The method of the claim 4 further comprising searching a sample database to find the predefined artifact, and prompting the predefined artifact.

6. The method of the claim 1, wherein the page comprises content of an e-mail or a message.

7. The method of the claim 1, wherein the one or more contact actions comprises multi-touch contact actions.

8. The method of the claim 1, wherein the performing the operation comprises sending the page as a message through a network.

9. The method of the claim 1, wherein the performing the operation comprises deleting the page.

10. An electronic device, comprising:
a touch-screen display;
a processor;
a memory; and
one or more modules stored in the memory, wherein the one or more modules are adapted to be executed by the processor to:
display a page on the touch-screen display;
detect one or more contact actions on the page on the touch-screen display;
transform the page into a predefined artifact in response to the one or more contact actions;
receive a predefined command action to the predefined artifact displayed in the touch-screen display; and
perform an operation on the predefined artifact in response to the predefined command action.

11. The electronic device of the claim 10, wherein the one or more modules are further adapted to detect a dragging action on one or more edges of the page, and fold the page in response to the dragging action.

12. The electronic device of the claim 11, wherein the one or more modules are further adapted to detect a dragging action on the one or more edges of the page and a slide operation on the one or more edges of the page, and fold the page in response to the dragging action and the slide operation.

13. The electronic device of the claim 10, wherein the one or more contact actions comprise a series of contact actions.

14. The electronic device of the claim 13, wherein the one or more modules are further adapted to search a sample database to find the predefined artifact, and prompt the predefined artifact.

15. The electronic device of the claim 10, wherein the page comprises content of an e-mail or a message.

16. The electronic device of the claim 10, wherein the one or more contact actions comprises multi-touch contact actions.

17. The electronic device of the claim 10, wherein the operation comprises sending the page as a message through a network.

18. The electronic device of the claim 10, wherein the operation comprises deleting the page.
